# EUROPEAN PATENT APPLICATION

(11) **EP 1 901 221 A1**
(43) Date of publication of application: **19.03.2008**
(21) Application number: 06766536.4
(22) Date of filing: 09.06.2006
(51) Int. Cl.: G06Q 20/00

(54) **SETTLEMENT SYSTEM USING CARD SETTLEMENT TERMINAL**

(30) Priority: 09.06.2005 JP 2005170128
(71) Applicant: Digital Check, Inc, Tokyo, 163-0238 (JP)
(72) Inventor: DOKI, Takayuki c/o DIGITAL CHECK, INC.,, Tokyo, 163-0238 (JP)
(74) Representative: Nicholls, Michael John
(86) International application number: PCT/JP2006/311624
(87) International publication number: WO 2006/132362

(57) **Abstract**

Proposed is a settlement system and method capable of enhancing reliability. This settlement system for performing card settlement based on card information that is read from a card by a card settlement terminal or input into the card settlement terminal by external operation includes an imaging unit for taking an image of a user of the card during the card settlement, and an image accumulation unit connected to the imaging the via a network and for storing and managing image data. The imaging unit sends image data of the card user obtained by the imaging to the image accumulation unit via the_network, and the image accumulation unit searchably stores and manages the image data sent from the imaging unit.

## Description

### Technical Field

The present invention relates to a settlement system using a card settlement terminal, and, for instance, can be suitably applied to a settlement system that performs card settlement with a credit card or the like.

### BackgroundArt

In recent years, card settlement using credit cards and Debit cards is often used as a method for settling the payment in department stores and restaurants. In this kind of card settlement, there is an advantage in that the card user only has to sign one's name or enter one's personal identification number, and settlement can be conducted simply without having to use cash.

### Disclosure of the Invention

### Problems to be Solved by the Invention

Meanwhile, in recent years, counterfeit cards are dramatically increasing in the credit card industry. As described above, however, since settlement using a credit card is conducted only by the card user signing one's name or entering one's personal identification number, it is difficult to get a lead on the criminal, and much trouble and time are required in identifying such criminal.

In the foregoing case, if it is possible to facilitate the identification of the criminal who used the card without authorization, this will lead to the suppression of unauthorized use of cards, and consequently lead to the improvement in reliability of the overall settlement system.

The present invention was devised in view of the foregoing points. Thus, an object of the present invention is to propose a settlement system capable of enhancing reliability.

### Means for Solving the Problems

In order to achieve the foregoing object, the present invention provides a settlement system for performing card settlement based on card information that is read from a card by a card settlement terminal or input into the card settlement terminal by external operation. This settlement system comprises an imaging means for taking an image of a user of the card during the card settlement, and an image accumulation means connected to the imaging means via a network and for storing and managing image data. The imaging means sends image data of the card user obtained by the imaging to the image accumulation means via the network, and the image accumulation means searchably stores and manages the image data sent from the imaging means.

As a result of searchably storing and managing image data of the card user's image in the image accumulation means during card settlement, even when the card is used without authorization, identification of the criminal can be facilitated based on the corresponding image data stored in the image accumulation means.

### Advantage of the Invention

According to the present invention, it is possible to inhibit the unauthorized use of cards, and consequently enhance reliability of the overall settlement system.

### Best Mode for Carrying out the Invention

An embodiment of the present invention is now explained in detail with reference to the attached drawings.

### (1) Configuration of Settlement System of Present Embodiment

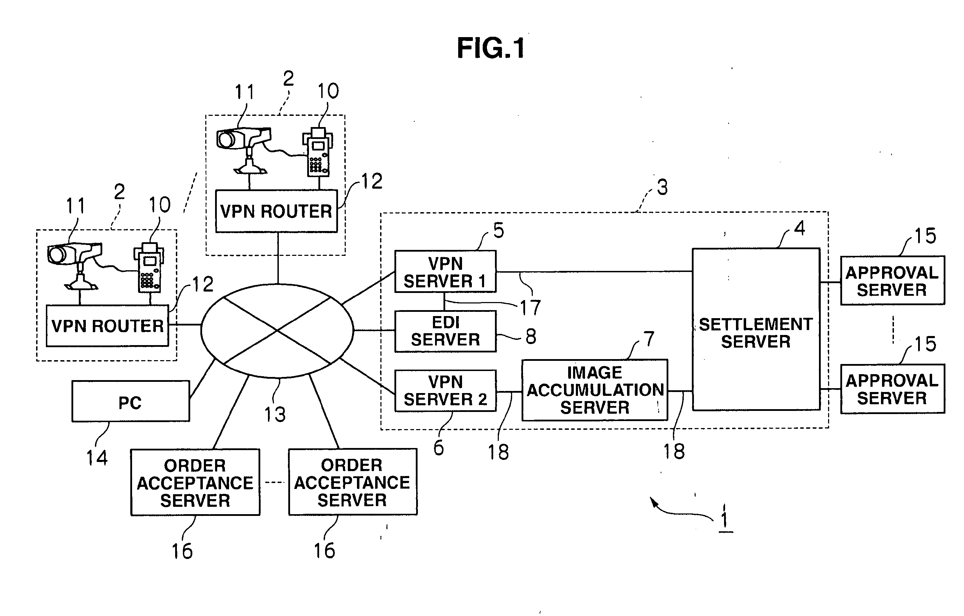

Fig. 1 shows the settlement system according to the present embodiment, which is configured from a plurality of terminal-side subsystem units 2 installed in the respective affiliated stores providing card settlement service such as shops and restaurants, a settlement server 4 installed in a center 3 of the respective card settlement service vendors, first and second VPN (Virtual Private Network) servers 5, 6, an image accumulation server 7, an EDI (Electronic Data Interchange) server 8, and the like.

Each terminal-side subsystem unit 2 is configured from a card settlement terminal 10, a monitor camera 11, and a VPN router 12. The card settlement terminal 10, for example, is a small, floor-type settlement terminal such as a CAT terminal, and comprises a card read function for reading data from magnetic stripe cards, contact/non-contact IC (Integrated Circuit) cards, or the like.

The card settlement terminal 10 is connected to a network 13 configured from the Internet, a LAN (Local Area Network) or a telephone line via the VPN router 12, and is capable of sending card settlement information to the settlement server 4 via the network 13. The card settlement terminal 10 is allocated with a local IP from the first VPN server 5 so as to prevent external access from someone with an ill will.

The monitor camera 11 is a standard camera with a CCD (Charge Coupled Device), and is installed so as to take an image of the card user at the cash register using card settlement. The monitor camera 11 is connected to the network 13 via the VPN router 12, and capable of sending the image data obtained by imaging to the image accumulation server 7 according to an FTP (File Transfer Protocol) protocol or the like. The monitor camera 11 is allocated with a global IP from the second VPN server 6 so that the owner or manager of the store can use the personal computer 14 in one's home or a portable communication terminal such as a mobile phone to externally view the image taken with the monitor camera 11.

The VPN router 12 is a repeater comprising a CPU, a ROM storing various control programs, a RAM as the work memory of the CPU, and so on, and is connected to the network 13. The VPN router 12 is equipped with a VPN communication function capable of encrypting data and communicating with the first VPN server 5 in order to eliminate the dangers when the card settlement terminal 10 sends card settlement information to the settlement server 4 via the network 13. If the network 13 is a telephone line, the VPN router 12 can be omitted.

The first and second VPN servers 5, 6 respectively comprise a CPU (Central Processing Unit), a ROM (Read Only Memory) storing various control programs, a RAM (Random Access Memory) as a work memory of the CPU, a hard disk device storing various types of application software, and so on. The first and second VPN servers 5, 6 comprise a VPN communication function capable of encrypting data and communicating with the VPN router 12. Here, the first VPN server 5 is allocated with a local IP (Internet Protocol) address for the same reason as the reason described above for the card settlement terminal, and the second VPN server 6 is allocated with a global IP for the same reason as the reason described above for the monitor camera.

The settlement server 4 is connected via a dedicated line to a plurality of authorization servers 15 installed respectively in consumer credit firms, banks, gift certificate issuing companies, and major mass merchandising stores for performing authorization processing of card settlement and issue processing of gift certificate/shareholder special benefit coupons described later. The settlement server 4 comprises a CPU, a ROM storing various control programs, a RAM as a work memory of the CPU, a hard disk device storing various types of application software, a communication unit for communicating with the authorization server 15 of a consumer credit firm, and so on. The CPU executes necessary control processing based on control programs stored in the ROM and application software stored in the hard disk device so as to enable various operations described later of the overall system.

The image accumulation server 7 comprises a CPU, a ROM storing various control programs, a RAM as a work memory of the CPU, a hard disk device storing various types of application software, and a large-capacity storage unit configured in RAID (Redundant Array of Inexpensive Disks) format. The image accumulation server 7 retains a database for managing the image data (hereinafter referred to as the "image accumulation database") in the storage unit, and is capable of storing the image data transferred from the respective card settlement terminals 10 described later in the image accumulation database, and searchably storing and managing such image data.

The EDI server 8 comprises a CPU, a ROM storing various control programs, a RAM as a work memory of the CPU, and a hard disk device storing various types of application software. The EDI server 8 also comprises a communication unit for communicating with the order acceptance server 16 of the customer connected to the network 13 via the network 13.

Among the settlement server 4, the first and second VPN servers 5, 6, the image accumulation server 7 and the EDI server 8 installed in the center 3 of the card settlement service vendor, the settlement server 4, the first VPN server 5 and the EDI server 6 are mutually connected via a first LAN 17, and capable of mutually exchanging necessary commands and data through the first LAN 17. The settlement server 4, the image accumulation server 7 and the second VPN server 6 are also connected in this order via a second LAN 18, and capable of mutually exchanging necessary commands and data through the second LAN 18.

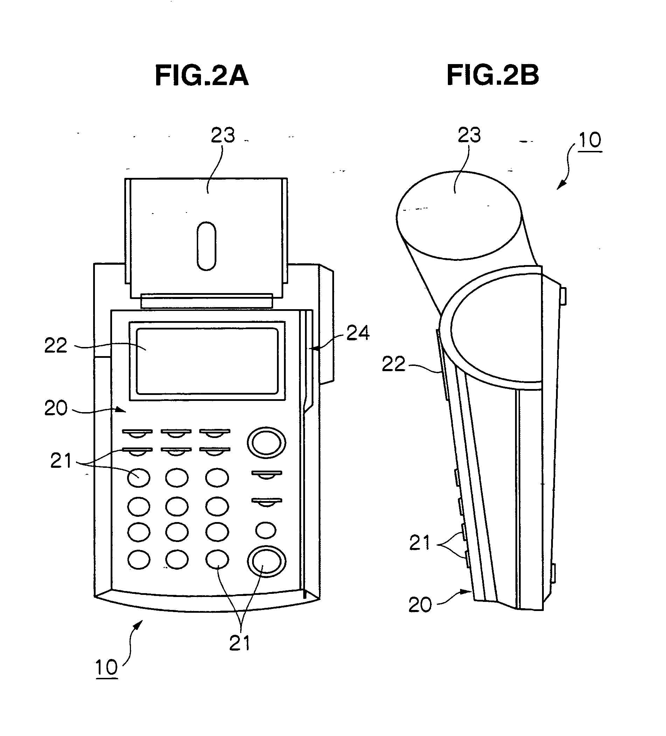

Fig. 2 shows the external configuration of the card settlement terminal 10. The card settlement terminal 10 is provided with a plurality of operational keys 21 in which a numerical keypad is disposed on its top-surface operation panel 20, and a display 22 configured from a liquid crystal panel. A roll paper housing unit 23 is provided at the upper end of the operation panel 20 for housing roll paper to be used as the receipt, and a card reader unit 24 compatible with various types of cards such as magnetic cards and contact/non-contact IC cards is provided to the right side of the operation panel 20.

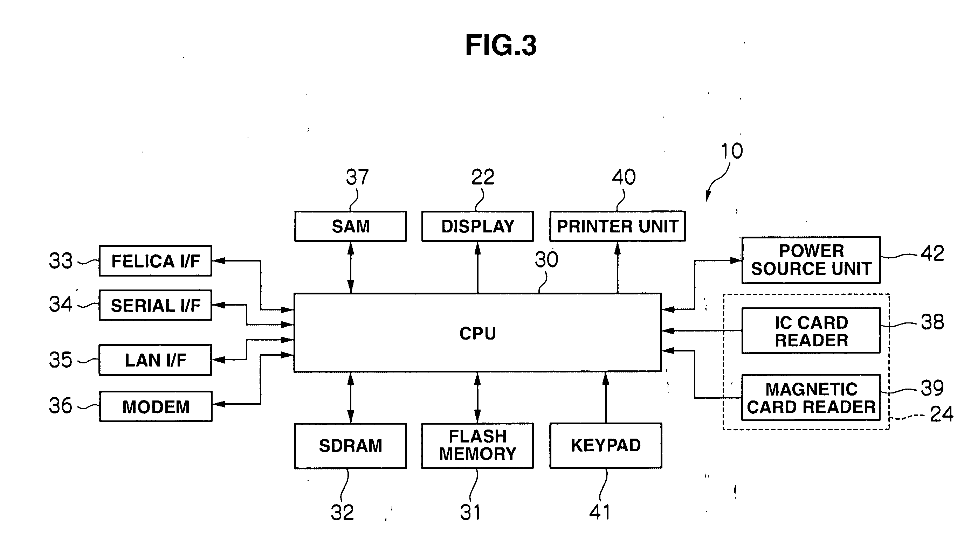

The card settlement terminal 10, as shown in Fig. 3, is internally provided with a Felica interface 33, a serial interface 34 such as an ultra serial RS-232C interface, a LAN interface 35, and a modem 36, and can be connected to the network 13 (Fig. 1) via the LAN interface and/or the modem 36, connected to the Felica terminal via the Felica interface 33, and connected to the monitor camera 11 (Fig. 1) via the serial interface 34.

The card settlement terminal 10 is further internally provided with a CPU 30 for governing the operational control of the overall card settlement terminal 10, a flash memory 31 storing various control programs, an SDRAM (Synchronous Dynamic RAM) 32 and a SAM 37 as a work memory of the CPU 30, an IC card reader 38 compatible with both contact and noncontact IC cards, a magnetic card reader 39 for reading data from magnetic cards, a printer unit 40 for printing necessary information on the roll paper stored in the roll paper housing unit 23, a keypad 41 on which each of the operational keys 21 is formed, and a power source unit 42 for supplying power to the respective components.

Here, the CPU 30 controls the various interfaces of the serial interface 34, the display 22 and the printer unit 40 based on various control programs stored in the flash memory 31 and the operational input signals given from the keypad 41 when the operator presses the operational keys 21 (Fig. 2), and thereby performs the various operations described later of the overall card settlement terminal 10.

### (2) Various Functions in Settlement System

The various service functions loaded in the settlement system 1 are now explained.

### (2-1) Image Accumulation Function During Settlement

The settlement system 1 is equipped with an image accumulation function during settlement of taking an image of the card user's face during card settlement using a credit card, Debit card or Felica card to be accumulated in the image accumulation server 7 by associating such image data and the relevant slip number or the like.

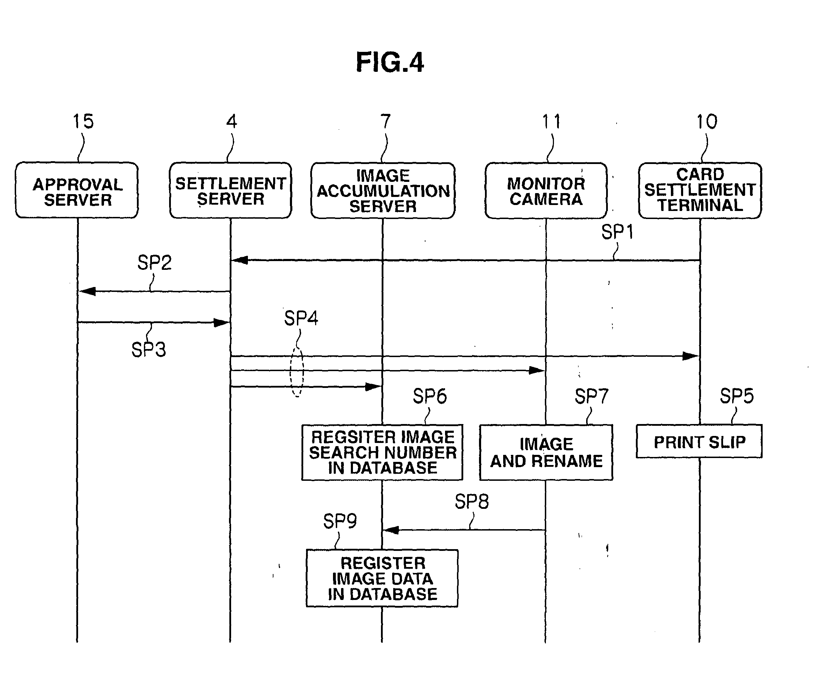

Fig. 4 shows the sequential processing flow concerning the image accumulation function during settlement. During settlement by a credit card or the like, the clerk passes the credit card or the like through the card reader unit 24 of the card settlement terminal 10 so as to cause the card settlement terminal 10 to read card information such as the card number recorded on the card, and subsequently inputs necessary information such as the amount of settlement in the card settlement terminal 10. The clerk thereafter performs operation to request the consumer credit firm or the like to make a referral of the card settlement. Here, the card settlement terminal 10 sends the card information read from the card and information such as the amount of settlement input by the clerk as settlement information, together with a referral request command, to the VPN router 12. The VPN router 12 respectively encrypts and sends the supplied settlement information and referral request command to the settlement server 4 via the first VPN server 5 (SP1).

When the settlement server 4 receives the referral request command, it sorts and sends such referral request command to the authorization server 15 of the corresponding consumer credit firm, bank or the like (SP2). When the settlement server 4 receives the processing result of the authorization processing from the authorization server 15 (SP3), it encrypts and sends such processing result to the corresponding card settlement terminal 10 via the first VPN server 5. Thereby, the processing result of the authorization processing will be decrypted in the corresponding VPN router 12 and given to the card settlement terminal 10 (SP4). Based on the processing result of the authorization processing, the card settlement terminal 10 prints a prescribed sales slip when an approval is obtained (SP5), and displays a message to the effect that an approval could not be obtained on the display 22 when an approval could not be obtained.

Meanwhile, the settlement server 4 executes the following processing in parallel with the foregoing card settlement processing when the approval of card settlement is obtained from the authorization server 15. In other words, the settlement server 4 creates an image search number, which is a combination in a prescribed pattern of an authorization number that is sent as a part of the processing result of authorization processing from the authorization server 15 to the image accumulation server 7, and an identification code of the card settlement terminal 10 requesting the card settlement, and sends this to the image accumulation server 7 (SP4). When the image accumulation server 7 receives the image search number, it registers such image search number in the image accumulation database (SP6).

When the approval of card settlement is obtained from the authorization server 15 as described above, the settlement server 4 sends the foregoing image search number and imaging command to the monitor camera 11 together with the sending of the processing result of authorization processing to the corresponding card settlement terminal 10 (SP4).

The monitor camera 11 that received the imaging command takes one or more still images. The monitor camera 11 renames the respective files of image data of the obtained one or more still images into file names using the image search number sent from the settlement server 4 (SP7), and thereafter encrypts and sends the image data according to an FTP (File Transfer Protocol) protocol to the image accumulation server 7 via the second VPN server 6 (SP8). The image accumulation server 18 thereby associates this image data with the image search number registered at step SP7 and registers (stores) it in the image accumulation database (SP9).

Like this, with the settlement system 1, the image of the card user's face during card settlement is taken, and the image data of such imaging is associated with the authorization number (slip number) at such time and the identification code of the corresponding card settlement terminal 10 and accumulated in the image accumulation server 7. The image data registered in the image accumulation database of the image accumulation server 7 as described above can be read from the image accumulation database with the image search number as the keyword.

### (2-2) Point Management Service Function

Meanwhile, the settlement system 1 is equipped with a point management service function for managing the points granted according to the price paid. The term "points" as referred to herein are the scored points granted to a person who purchased a product or received a service according to the price paid, and which can be used for paying all or a part of the price of any subsequent product to be purchased or service to be received and/or exchanged with a product of a value according to the number of points accumulated.

Here, as the foregoing points, there are two types of points; namely, closed points that are granted by each store or affiliated chain and which are only valid at such store or affiliated chain, and open points that are valid at all stores participating in the point service being provided by the businesses of the settlement system 1. With the settlement system 1, based on a request from the store or the affiliated chain, it is possible to grant both closed points and open points to the payer.

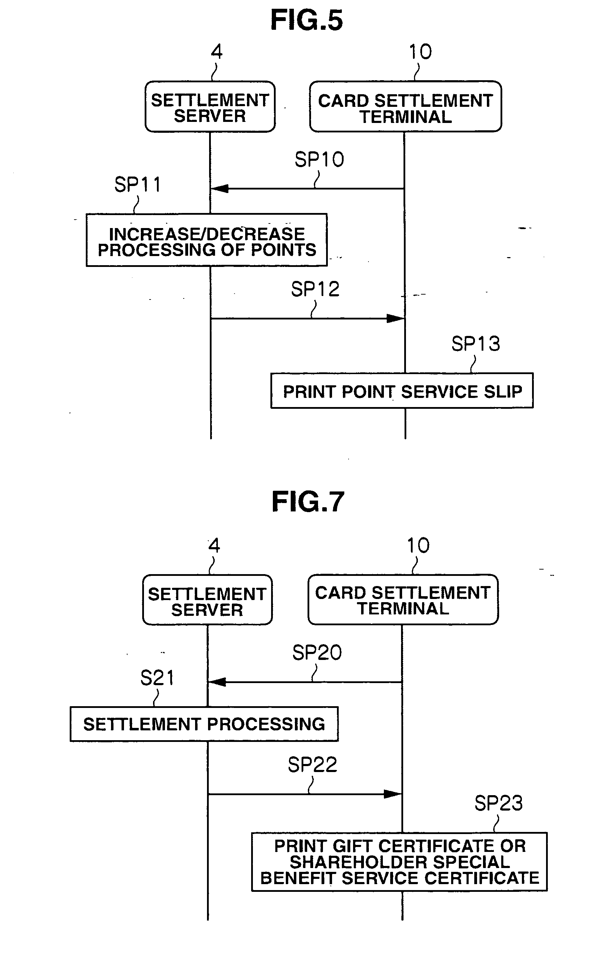

Fig. 5 shows the sequential processing flow of the point management service function. Foremost, the store clerk sets the operation mode of the card settlement terminal 10 to a point service mode, and thereafter passes a special point card or a credit card that doubles as the point card through the card reader unit 24 of the card settlement terminal 10 so as to cause the card settlement terminal 10 to read card information such as the card number recorded on the card. The clerk thereafter sets either the granting (during the purchase of a product, etc.) or cancellation (during the usage of points, etc.) of points, also enters the amount of settlement and method of payment (credit card, Debit card, cash, etc.), and then inputs a command for executing the point service. Consequently, the input information is given from the card settlement terminal 10 to the VPN router 12, such information is encrypted in the VPN router 12, and thereafter sent to the settlement server 4 via the first VPN server 5 as point processing information (SP10).

Here, the settlement server 4 is registering and managing the respective number of points of closed points and open points per card owner of the point card and the type of point service that is being provided by each store (open point service that grants only open points, closed point service that only grants closed points, or simultaneous point service that grants both open points and closed points) in a database (hereinafter referred to as the "point database"). When the settlement server 4 receives the point processing information from the card settlement terminal 10, based on the point processing information, it increases or decreases the corresponding closed points and/or open points registered in the point database according to the price paid by the card owner (SP11). The settlement server 4 thereafter encrypts the increased or decreased points as point information via the first VPN server 5, and sends it to the corresponding card settlement terminal 10 (SP12).

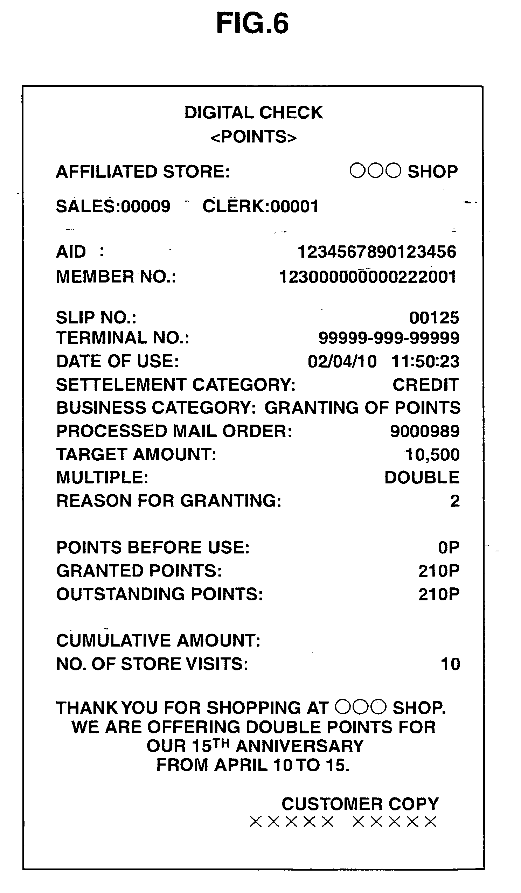

When the point information is decrypted with the VPN router 12 and given to the card settlement terminal 10, the card settlement terminal 10 prints a point service slip as shown in Fig. 6 based on such point information (SP13). The card owner is thereby able to confirm the number of points that he/she currently owns based on the point service slip.

### (2-3) Gift Certificate/Shareholder Special Benefit Coupon Service Function

Meanwhile, with the settlement system 1, it is possible to send gift certificates or shareholder special benefit coupons as data to the registered card owner. The settlement system 1 is equipped with a gift certificate/shareholder special benefit coupon service function for managing the data of such gift certificates or shareholder special benefit coupons for each such card owner. In order for the registered card owner to receive the service of the gift certificate/shareholder special benefit coupon service function, the person (individual or corporation) wishing to provide the gift certificate or shareholder special benefit coupon to the card owner must send such gift certificate card or shareholder special benefit card to the card owner in advance.

Fig. 7 shows the sequential processing flow concerning the gift certificate/shareholder special benefit coupon service function. Foremost, the store clerk sets the operation mode of the card settlement terminal 10 to the gift certificate/shareholder special benefit coupon service mode, and thereafter passes the gift certificate card or shareholder special benefit card received from the card owner through the card reader unit 24 of the card settlement terminal 10 so as to cause the card settlement terminal 10 to read card information such as the card number recorded on the card. The clerk thereafter inputs the amount to be spent requested by the card owner, for instance, in 1000 JPY units, and then inputs a command for executing the gift certificate/shareholder special benefit coupon service. Thereby, the input information is given from the card settlement terminal 10 to the VPN router 12, encrypted in the VPN router 12, and thereafter sent to the settlement server 4 via the first VPN server 5 as gift certificate/shareholder special benefit service information (SP20).

Here, the settlement server 4 is registering and managing the amount of gift certificate or shareholder special benefit coupon requested by the individual or corporation to be provided to the card owner of the gift certificate card or shareholder special benefit card as data in a database (hereinafter referred to as the "gift certificate/shareholder special benefit coupon database"). When the settlement server 4 receives the gift certificate/shareholder special benefit service information from the card settlement terminal 10, it deducts the requested amount of spending from the amount of gift certificate or shareholder special benefit coupon registered in the gift certificate/shareholder special benefit coupon database regarding the card owner based on the gift certificate/shareholder special benefit service information (SP21).

The settlement server 4 thereafter encrypts and sends the balance of the gift certificate/shareholder special benefit coupon as balance information via the first VPN server 5 to the corresponding card settlement terminal 10 (SP22). If the amount of gift certificate or shareholder special benefit coupon registered in the gift certificate/shareholder special benefit coupon database is less than the amount of spending requested by the card owner, the settlement server 4 encrypts and sends an error message to such effect via the first VPN server 5 to the corresponding card settlement terminal 10 (SP22).

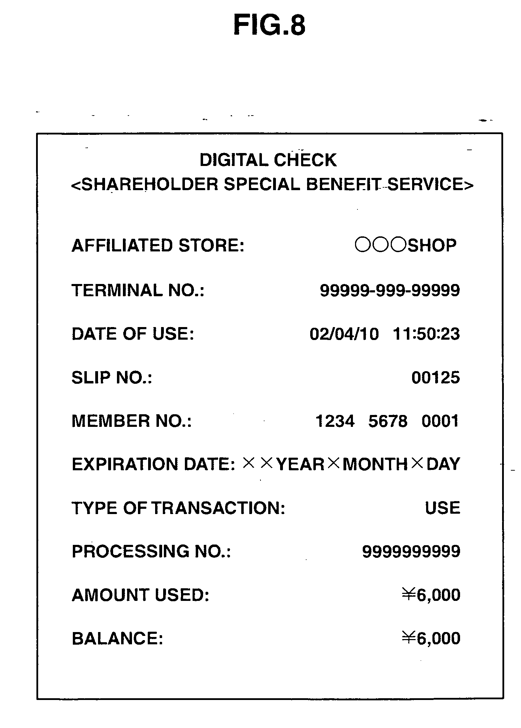

When the balance information is decrypted in the VPN router 12 and given to the card settlement terminal 10, based on such balance information, the card settlement terminal 10 prints a gift certificate service slip showing the amount designated by the card owner, or a shareholder special benefit service slip, for instance, as shown in Fig. 8 indicating the amount designated by the card owner and the balance (SP23). The card user is thereby able to use the gift certificate service slip or shareholder special benefit service slip as a gift certificate or shareholder special benefit coupon in the store, and confirm his/her current point balance.

### (2-4) Online Order Placement Service Function

The settlement system 1 is also equipped with an online order placement service function which enables affiliated stores to place and receive orders of products using the card settlement terminal 10.

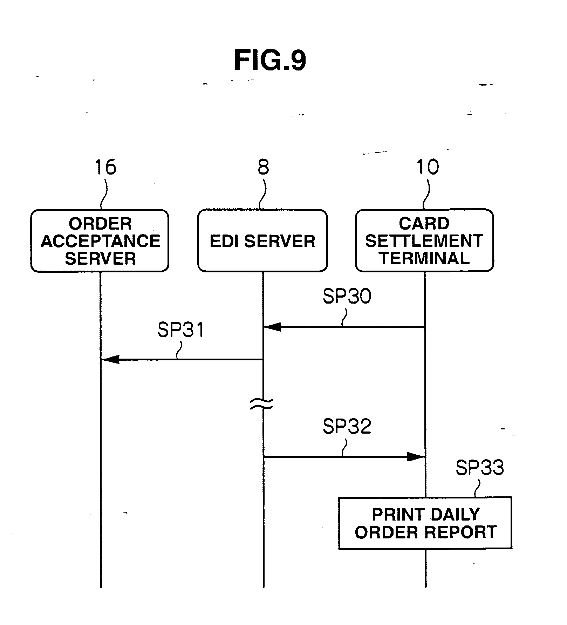

Fig. 9 shows the sequential processing flow concerning-the online order placement function. When an affiliated store is to place an order, the clerk of such affiliated store foremost sets the card settlement terminal 10 to an online order placement mode, thereafter inputs prescribed information such as the product code and quantity of the product to be ordered into the card settlement terminal 10, and then inputs a command for executing the order placement. The input information is sent as order placement information from the card settlement terminal 10 to the EDI server 8 via the first VPN server 5 (SP30).

The EDI server 8 retains a database associating the product code of the various products and the customer code of the customer company that has been previously registered as an order placement destination of products (hereinafter referred to as the "order reception/placement database"). When the EDI server 8 receives order placement information from the card settlement terminal 10, it refers to the order reception/placement database, and sorts and sends the order placement information per product subject to order placement to the order acceptance server 12 of each corresponding customer company (SP31).

When it eventually becomes a prescribed time, the EDI server 8 creates an order placement daily report that summarizes the contents of orders placed that day for each card settlement terminal 10, and sends that data (hereinafter referred to as the "order placement daily report data") to the respective card settlement terminals 13 via the network 13 (SP32).

When the card settlement terminal 10 receives the order placement daily report data from the EDI server 8, it prints an order placement daily report based on the order placement daily report data (SP33). It is thereby possible to confirm the contents of the order placement of products for that day based on the order placement daily report.

### (3) Operation and Effect of Present Embodiment

In the foregoing configuration, with the settlement system 1, an image of the card user's face during card settlement is taken, and that image data is searchably stored and managed in the image accumulation server 7.

Thus, according to the settlement system 1, for instance, even in cases where the credit card or the like is used by a third party without authorization, since it will be possible to acquire the still image showing the face of the card user who used the credit card or the like without authorization from the image accumulation database based on the slip number or the like, it will possible to facilitate the identification of the criminal who used the card without authorization. In addition, this will lead to the suppression of unauthorized use of cards, and consequently lead to the improvement in reliability of the overall settlement system.

According to the foregoing configuration, as a result of taking an image of the card user's face during settlement and searchably storing and managing image data of the card user's image in the image accumulation server 7 during card settlement, even when the card is used without authorization, identification of the criminal can be facilitated based on the corresponding image data stored in the image accumulation means. Thus, it will be possible to inhibit the unauthorized use of cards, and consequently enhance reliability of the overall settlement system.

### (4) Other Embodiments

Although the foregoing embodiment explained a case of taking an image of the card user's face with the monitor camera 11 immediately after the card settlement is approved by the authorization server 15 of a consumer credit firm or the like, the preset invention is not limited thereto, and, for instance, the image of the card user's face may be taken with the monitor camera 11 at a timing where the clerk inputs the command for executing referral of card settlement using the card settlement terminal 10, and the timing of taking the image may be arbitrarily set.

In addition, although the foregoing embodiment explained a case of using a dedicated gift certificate card or shareholder special benefit coupon service card for the gift certificate/shareholder special benefit coupon service, the present invention is not limited thereto, and, for instance, a credit card may be used to receive the gift certificate/shareholder special benefit coupon service.

### Industrial Applicability

The present invention can be broadly applied to settlement systems that perform various types of settlements in addition to settlement systems that perform card settlement of credit cards and the like.

### Brief Description of the Drawing

Fig. 1 is a block diagram showing the configuration of a settlement system according to an embodiment of the present invention;
Fig. 2A- 2B are a front view and a side view showing the configuration of a card settlement terminal;
Fig. 3 is a block diagram schematically showing the internal configuration of the card settlement terminal;
Fig. 4 is a timing chart explaining the image accumulation function during settlement;
Fig. 5 is a timing chart explaining the point management service function;
Fig. 6 is a schematic diagram showing a point service slip;
Fig. 7 is a timing chart explaining the gift certificate/shareholder special benefit coupon service function;
Fig. 8 is a schematic diagram showing a shareholder special benefit service slip; and
Fig. 9 is a timing chart explaining the online order placement service function.

### Description of Reference Numerals

1...... Settlement System, 2...... Terminal-side Subsystem Unit, 4...... Settlement Server, 5, 6...... VPN Server, 7...... Image Accumulation Server, 8...... EDI Server, 10...... Card Settlement Terminal, 11...... Monitor Camera, 12......VPN Router, 13...... Network, 15...... Approval Server, 16...... Order Acceptance Server

## Claims

1. A settlement system for performing card settlement based on card information that is read from a card by a card settlement terminal or input into said card settlement terminal by external operation, comprising:
imaging means for taking an image of a user of said card during said card settlement; and
image accumulation means connected to said imaging means via a network and for storing and managing image data;
wherein said imaging means sends image data of said card user obtained by said imaging to said image accumulation means via said network; and
wherein said image accumulation means searchably stores and manages said image data sent from said imaging means.

2. The settlement system according to claim 1, further comprising:
authorization means for performing authorization processing of said card settlement; and
settlement means connected to said card settlement terminal via said network, and for sorting said card information provided from said card settlement terminal to the corresponding authorization means, and sending the processing result of said authorization processing provided from said authorization means to the corresponding card settlement terminal;
wherein said settlement means sends an authorization number provided from said authorization means to said image accumulation means when said card settlement is approved; and
wherein said image accumulation means stores and manages said image data by associating it with the corresponding authorization number.

3. The settlement system according to claim 2,
wherein said card settlement terminal encrypts and sends said card information to said settlement means; and
wherein said settlement means encrypts and sends the processing result of said authorization processing performed by said authorization means to said card settlement terminal.

4. The settlement system according to any one of claims 1 to 3,
wherein said imaging means encrypts and sends said image data to said image accumulation means.

5. The settlement system according to claim 1, further-comprising:
point management means for managing points for each card owner which are granted according to the price paid during said card settlement, and which may be used for paying all or a portion of the price of a product or a service and/or exchanged with a product of a value according to the accumulated number of points.

6. The settlement system according to claim 6,
wherein said points include closed points which are granted by each store or affiliated chain and valid only in said store or affiliated chain, and open points which are valid in all stores participating in the point service; and
wherein said point management means manages the respective number of said closed points and said open points for each of said card owners, and the type of point service provided by each of said stores, and increases the corresponding closed points and/or open points according to the price paid by said card owner.

## Amended claims

### Amended claims under Art. 19.1 PCT

1. (Amended) A settlement system for performing card settlement based on card information that is read from a card by a card settlement terminal or input into said card settlement terminal by external operation, comprising:
imaging means for taking an image of a user of said card during said card settlement;
image accumulation means connected to said imaging means via a network and for storing and managing image data;
authorization means for performing authorization processing of said card settlement: and
settlement means connected to said card settlement terminal via said network, and for sorting said card information provided from said card settlement terminal to the corresponding authorization means, and sending the processing result of said authorization processing provided from said authorization means to the corresponding card settlement terminal;
wherein said imaging means sends image data of said card user obtained by said imaging to said image accumulation means via said network;
wherein said settlement means creates an image search number by combinin4 an authorization number provided from said authorization means when said card settlement is approved and an identification number of said card settlement terminal that requested said card settlement; and
wherein said image accumulation means searchably stores and manages said image data sent from said imaging means by associating [said image data] with the corresponding image search number.

2. (Amended) The settlement system according to claim 1.
wherein said settlement means sends the created image search number to the corresponding card settlement terminal; and
wherein said card settlement terminal renames the file name of said image data obtained by imaging into a file name using the corresponding image search number, and thereafter sends the file of said image data to said image accumulation means via said network.
